# EUROPÄISCHE PATENTSCHRIFT

(11) **EP 0 460 350 B1**
(45) Veröffentlichungstag und Bekanntmachung des Hinweises auf die Patenterteilung: **03.05.1995**
(21) Anmeldenummer: 91101575.8
(22) Anmeldetag: 06.02.1991
(51) Int. Cl.: H02G 3/04, F16L 3/22

(54) **Weitspannkabelpritsche**
Support for large extended cables
Support pour câbles longs étendus

(30) Priorität: 06.06.1990 DE 4018047
(43) Veröffentlichungstag der Anmeldung: 11.12.1991
(73) Patentinhaber: Rieth & Co. GmbH, D-73230 Kirchheim (DE)
(72) Erfinder: Mätzler, Eberhard, W-7311 Notzingen (DE); Wennrich, Hans-Oswald, W-7311 Ohmden (DE)
(74) Vertreter: Rüger, Rudolf, Dr.-Ing.

(56) Entgegenhaltungen:
- EP-A- 0 119 670
- BE-A- 750 420
- DE-U- 8 331 211
- FR-A- 1 359 444
- NL-A- 7 904 309

## Beschreibung

Die Erfindung betrifft eine Kabelpritsche mit den Merkmalen des Oberbegriffs des Anspruches 1.

Aus der Praxis sind sogenannte Weitspannkabelpritschen bekannt, die zur stationären Verlegung von Kabeln, Schläuchen, Rohrleitungen u.dgl. dienen. Sie sind in Abständen von sechs Metern und mehr, bis zu zwölf Metern, unterstützt und hängen dazwischen frei durch. Die Kabelpritschen bestehen aus zwei im Querschnitt etwa C-förmigen Holmen, die aus einem entsprechend gewalzten Blech bestehen. Mit dem unteren Flansch jedes Holmes sind die längs der Pritsche äquidistant verteilten Sprossen meist gelenkig verbunden. Diese gelenkige Verbindung der Sprossen mit den Holmen dient dazu, wie dies beispielsweise in dem DE-Gm 83 31 211 beschrieben ist, die Kabelpritsche beispielsweise zum Transport in eine weniger platzbeanspruchende Form zu überführen, indem die beiden Holme bezüglich ihrer Längsrichtung gegeneinander verschoben werden, wodurch die Sprossen aneinander zur Anlage gebracht werden und dadurch die Pritsche in Querrichtung zu den Holmen weniger Platz in Anspruch nimmt. Bei der Installation der Kabelpritsche werden die Holme in der entgegengesetzten Richtung relativ zueinander bewegt, wodurch die Kabelpritsche auf ihre volle Breite entsprechend der Länge der Sprossen aufgespannt wird. Es entsteht dadurch eine rinnenartige Konstruktion, in die die Kabel u.dgl. eingelegt werden können.

Infolge ihres Aufbaus tritt in den C-förmigen Holmen bei Belastung der Pritsche ein Drehmoment auf, das die Holme in sich verwindet. Da ihr Abstand im Bereich des unteren Flansches durch die Sprossen festgelegt ist, biegt sich jeder Holm so, daß sich die oberen Flansche voneinander weg bewegen. Die Grenze der Tragfähigkeit einer Kabelpritsche ist erreicht, wenn die Neigung des Steges gegenüber der Vertikalen etwa 15° beträgt. Entsprechend der Neigung des Steges hat sich auch die Hauptträgheitsachse gekippt, d.h. jeder Holm wird nicht mehr nur parallel zu seiner größten Trägheitsachse auf Biegung beansprucht, sondern auch quer dazu.

Jede weitere Belastung der Kabelpritsche würde eine stärkere Verdrehung der-Holme und eine weitere Schräglage der Hauptträgheitsachse zur Folge haben. Dadurch bedingt, würde andererseits die Belastbarkeit sinken, bis schließlich die Fließgrenze des Materials überschritten wird und die Biegefestigkeit des verwundenen Holmes lawinenartig in sich zusammenbricht. Solche zusätzlichen Belastungen entstehen beispielsweise auch dann, wenn ein Handwerker eine Leiter an eine Kabelpritsche anlehnt und die Leiter betritt.

Eine Vergrößerung der Wandstärke der Holme verbessert nur bedingt die Tragfähigkeit der Kabelpritsche, denn die größere Wandstärke führt andererseits zu einer Vergrößerung des Gewichts der Holme und insoweit zu einer Vergrößerung der Grundbelastung der Holme.

Die BE-A-750 420 zeigt eine Kabelpritsche, bei der die Holme einen Z-förmig gekröpften Steg ohne oberen Flansch aufweisen. Unterhalb der Z-förmigen Abkröpfung geht der Steg in einen Flansch über, der in Richtung auf den gegenüberliegenden Holm zeigt und auf dem die jeweilige Sprosse der Kabelpritsche aufgelegt ist.

Bei der Kabelpritsche nach der FR-A-1 359 444 besteht jeder Holm aus einem in Längsrichtung des Holms durchlaufenden Steg, der, bezogen auf die normale Verwendungslage, an der oberen und an der unteren Kante mit einem Flansch versehen ist, der in Richtung auf den gegenüberliegenden Holm zeigt. An der Übergangsstelle zwischen dem Steg und dem betreffenden Flansch ist der Steg in der entgegengesetzten Richtung wie der Flansch weist, zurückgekröpft, so daß der gerade Teil des Flansches mittig über dem Steg verläuft. Es entsteht hierdurch eine Art "I"-Profil.

Die Sprossen bei der bekannten Kabelpritsche enden stumpf vor der freien Kante des unteren Flansches, und lediglich Laschen, die den Stoß überdecken, führen von dem Flansch der Sprosse zu dem Flansch des Holms.

Ausgehend hiervon ist es Aufgabe der Erfindung, eine Kabelpritsche zu schaffen, die in der Lage ist, ohne Vergrößerung der Wandstärke des Materials der Holme bei vergleichbarer Materialqualität höhere Traglasten aufzunehmen.

Diese Aufgabe wird erfindungsgemäß durch die Kabelpritsche mit den Merkmalen des Anspruches 1 gelöst.

Wenn die Sprossen die durch den Steg jedes Holmes definierte Ebene schneiden, d.h. mit anderen Worten die Sprossen durch den Steg hindurchführen, kann eine zusätzliche Momentenabstützung des Steges stattfinden. Der bei Belastung nach außen drängende Steg schwenkt entsprechend den Flansch nach oben bzw. es wird der Flansch infolge der auftretenden Zugspannungen angehoben, so daß sich die Sprosse selbst bei entsprechendem Spiel in der zugehörigen Öffnung des Steges unmittelbar am Steg anlegt. Bei weiterer Belastung wird eine Verschränkung des Steges nach außen durch die Sprosse verhindert, die gleichsam als Hebel wirkt und bestrebt ist, den Steg in die vertikale Lage zurückzudrehen.

Dies kann grundsätzlich auf zweierlei Weise erreicht werden, nämlich indem für jede Sprosse eine entsprechende Öffnung im Steg vorgesehen wird, was dann jedoch ein Zusammenfalten der Kabelpritsche zwecks Platzminimierung beim Transport verhindert. Insoweit günstiger ist es, wenn die Öffnung von einer unterhalb des Steges durchgehenden Nut gebildet wird, die in vertikaler Richtung gesehen, dieselbe Höhe hat wie die Sprosse, da es zur Erhöhung der Festigkeit nur darauf ankommt, daß die Sprossen in der Nut ein Moment bezüglich einer Achse erzeugen können, die parallel zur Längserstreckung des Holmes liegt. Die vertikale Achse, um die die Sprossen geschwenkt werden, ist dagegen bei Belastung kräftefrei.

Bei der Verwendung einer Nut ergeben sich besonders einfache Verhältnisse hinsichtlich der Sprosse als auch des Profils für den Holm, wenn die Nut glatt in die Oberseite des Flansches übergeht, weil dann gerade durchgehende Sprossen Verwendung finden können.

In diesem Sinne ist es auch vorteilhaft, wenn die Nut parallelflankig ausgebildet ist.

Um mit Sicherheit ein nach außen gerichtetes Moment im Steg zu erzeugen, ist es vorteilhaft, wenn der Steg an seiner oberen Kante mit einem Flansch versehen ist, der in Richtung auf den gegenüberliegenden Holm weist, wobei dieser Flansch zusätzlich nach unten zu abgewinkelt ist.

Günstige Verhältnisse hinsichtlich der Tragfähigkeit der Sprossen ergeben sich, wenn die Sprossen im Querschnitt C-förmig sind.

Wenn die Öffnungen für den Niet zum Anbringen der Sprosse in den Sprossen gegenüber der Längsachse versetzt sind, läßt sich ein sehr tiefes Eintauchen der Sprossen in die Nut erzielen, ohne daß beim Verschwenken die Gefahr besteht, daß eine Kante der Sprosse am Nutengrund anstößt und das Verschwenken blockiert.

In der Zeichnung ist ein Ausführungsbeispiel des Gegenstandes der Erfindung dargestellt. Es zeigen:
- Fig. 1: eine Kabelpritsche in einer perspektivischen Darstellung,
- Fig. 2: einen der Holme der Kabelpritsche nach Fig. 1 im Querschnitt,
- Fig. 3: die Sprosse der Kabelpritsche nach Fig. 1 im Querschnitt und
- Fig. 4: die Sprosse nach Fig. 3 in einer Draufsicht.

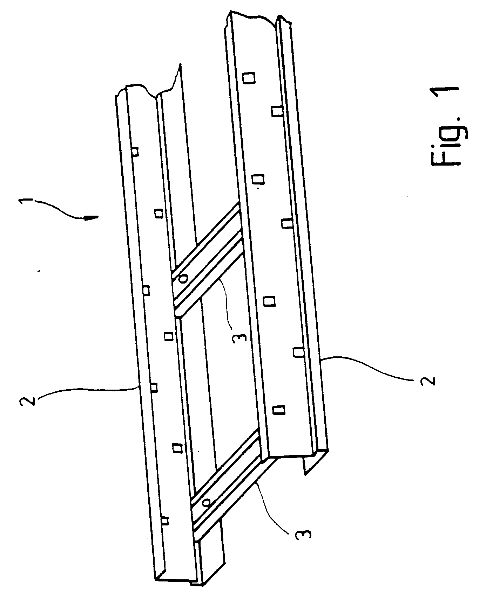

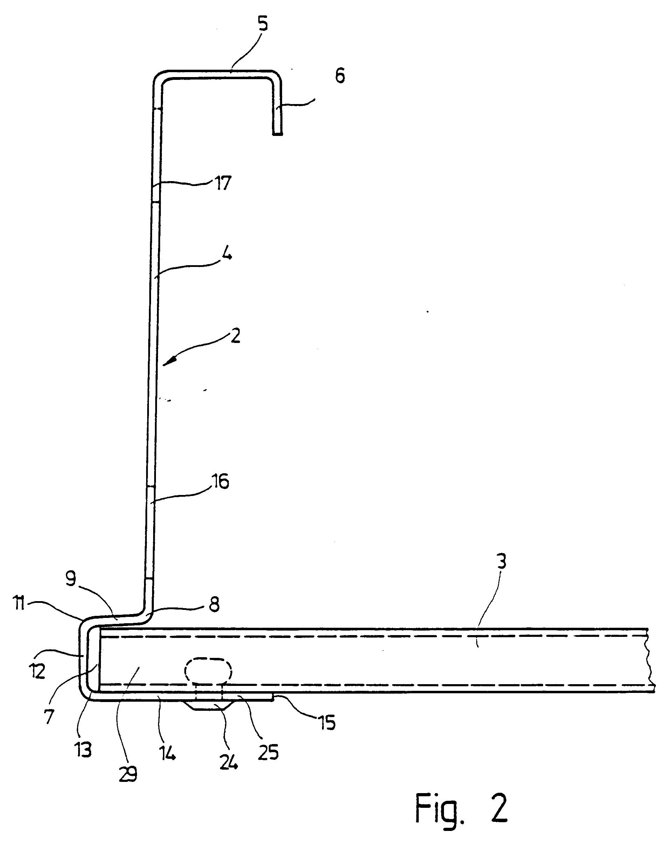

Fig. 1 zeigt in einer perspektivischen abgebrochenen Darstellung eine Kabelpritsche 1, die als Auflage für zu verlegende Kabel, Schläuche u.dgl. dient. Die Kabelpritsche 1 bildet für die zu verlegenden Kabel einen flachen Kanal und liegt im Gebrauchszustand endseitig auf Auslegern auf, die in einem Gebäude fest montiert sind. Die Kabelpritsche 1 besteht aus zwei mit Abstand parallel zueinander verlaufenden seitlichen Holmen 2, die bezüglich einer zwischen ihnen senkrecht verlaufenden Ebene spiegelbildlich angeordnet sind. Die beiden Holme 2 sind untereinander mit einer Vielzahl von gleich verteilt angeordneten Sprossen 3 verbunden, so daß sich eine leiternähnliche Gesamtanordnung ergibt. Jeder der beiden Holme 2 besteht aus einem gewalzten Blech, das, wie Fig. 2 zeigt, gebogen ist. Da beide Holme 2 zueinander spiegelsymmetrisch sind, genügt es, einen der beiden Holme zu beschreiben. Die Aussagen gelten sinngemäß auch für den anderen der beiden Holme 2; beide haben durchgehend gleiches Profil.

Der in Fig. 2 im Querschnitt sichtbare Holm 2 besteht aus einem in der Gebrauchslage vertikal verlaufenden Steg 4, der über die gesamte Länge des Holmes 2 durchläuft. An seinem oberen Ende ist der Steg 4 unter Ausbildung eines Flansches 5 rechtwinklig abgebogen, der in Richtung auf den gegenüberliegenden Holm 2 weist. Auch dieser Flansch 5 ist wiederum an seinem freien Ende abgewinkelt und bildet so eine nach unten weisende Leiste 6,die parallel und im Abstand zu dem Steg 4 verläuft. Die vertikale Höhe der Leiste 6 ist geringer als die Breite des Flansches 5, gemessen in Richtung quer zu der Kabelpritsche 1. Die Leiste 6 ist etwa halb so breit wie der Flansch 5.

An seinem unteren Ende geht der Steg 4 in eine Nut 7 über, die sich in Richtung auf den gegenüberliegenden Holm 2 öffnet und die über den Steg 4 nach außen, bezogen auf den von der Kabelpritsche 1 definierten Kanal vorsteht. Zur Ausbildung der Nut 7 ist der blechförmige Steg 4 an seinem unteren Ende bei 8 rechtwinklig nach außen zu abgebogen, so daß ein leistenförmiger Abschnitt 9 entsteht, der über die gesamte Länge des Steges 4 durchläuft und mit der außenliegenden Rückseite des Steges 4 einen rechten Winkel einschließt. Der leistenförmige Abschnitt 9 ist wiederum bei 11 nach unten zu abgewinkelt, wodurch ein ebener Boden 12 entsteht, der parallel zu dem Steg 4 verläuft. Der Boden 12 geht an seinem unteren Ende bei 13 in einen unteren Flansch 14 des Holmes 2 über. Auch der Boden 12 und der Flansch 14 laufen über die gesamte Länge des Holmes 2 bzw. des Steges 4 durch, wobei die Abmessungen des Flansches 14 derart sind, daß seine vordere freie Kante 15 etwa unterhalb der Leiste 6 läuft. Der Flansch 14 erstreckt sich rechtwinklig zu dem Steg 4 und weist auf den korrespondierenden Flansch 14 des gegenüberliegenden Holmes 2. Seine Oberseite geht glatt in die Nut 7 hinein.

Zur Anbringung von Schellen, Stoßlaschen u.dgl. ist der Steg 4 unterhalb des oberen Flansches 5 und oberhalb des leistenförmigen Abschnittes 9 mit Löchern oder Durchbrüchen 16 und 17 versehen, die längs dem Steg 4 äquidistant verteilt sind. Die Löcher 16 sowie die Löcher 17 bilden jeweils eine eigene Reihe, wobei die Löcher einer Reihe jeweils auf derselben Höhe liegen.

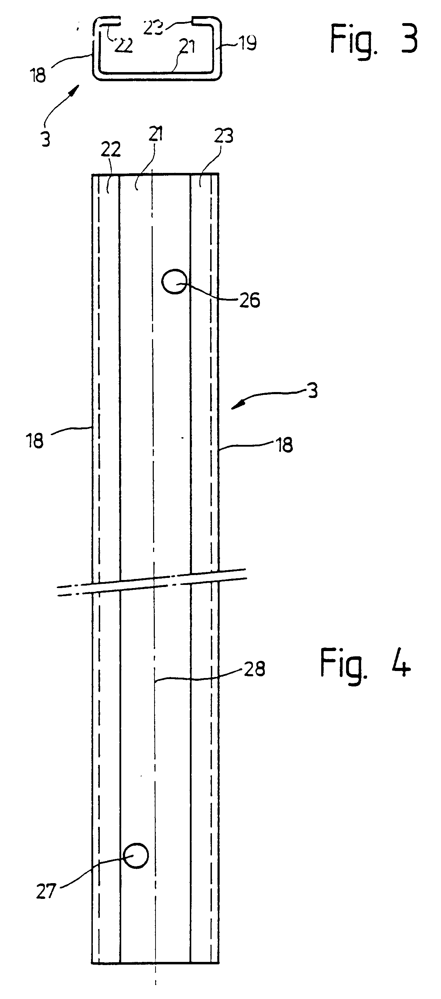

Die Sprossen 3 bestehen aus einem blechgewalzten C-Profil, das, wie aus Fig. 3 ersichtlich ist, von zwei parallel mit Abstand einander gegenüberstehenden Seitenwänden 18 und 19,einem sich zwischen den beiden Seitenwänden 18 und 19 erstreckenden planen Boden 21 sowie zwei aufeinander zu weisenden Flanschen 22, 23 begrenzt wird. Die Höhe der Sprossen 3, gemessen von der Außen- oder Rückseite des Bodens 21 bis zur Außen- oder Oberseite der Flansche 22, 23, entspricht zuzüglich einer kleinen positiven Toleranz der Weite der Nut 7, d.h. dem Abstand, den die Innenseite des leistenförmigen Abschnittes 9 von der Oberseite des Flansches 14 hat, der zu dem leistenförmigen Abschnitt 9 parallel verläuft. Alle Sprossen können deswegen mit geringem Spiel in die Nut 7 eingesteckt sein, wie dies Fig. 2 erkennen läßt, wobei die Sprossen 3 mit der Außenseite ihres Bodens 21 auf der Oberseite des unteren Flansches 14 aufliegen.

Jede der Sprossen 3 ist mit lediglich einem einzigen Niet 24 an dem entsprechenden Ende mit dem an diesem Ende befindlichen Holm 2 verbunden. Der Holm 2 enthält zu diesem Zweck in seinem unteren Flansch 14 ein Loch 25, das sich außerhalb der Nut 7, d.h. vor der Innenseite des Steges 4, befindet. Ein entsprechend korrespondierende Loch 26 bzw. 27 befindet sich in dem Boden 21 jeder Sprosse 3, und zwar in einem solchen Abstand, daß, wenn die Löcher 26 bzw. 27 mit den zugehörigen Löchern 25 fluchten, die betreffende Sprosse 3 bis in die Nut 7 hineinreicht. Allerdings sind die beiden Löcher 26 und 27 gegenüber der Längsachse 28 jeder Sprosse 3 versetzt, und zwar liegen sie, wie Fig. 4 zeigt, auf unterschiedlichen Seiten der Längsachse 28. Dementsprechend sind auch in den beiden Holmen 2 die zugehörigen Löcher 25 gegeneinander versetzt, und zwar so, daß wenn die beiden Holme 2 gleich ausgerichtet sind, die Sprossen 3 rechtwinklig zu den Holmen 2 verlaufen. Mit der versetzten Anordnung der Löcher 26 und 27 in Verbindung mit dem außerhalb der Nut 7 liegenden Niet 24 wird erreicht, daß beim Verschieben der beiden Holme 2 gegeneinander die entsprechend um die zugehörigen Nieten 24 herumschwenkenden Sprossen 3 mit ihren Enden aus den Nuten 7 der beiden Holme 2 freikommen, bevor eine weitere Verschiebebewegung der beiden Holme 2 gegeneinander durch das Anliegen der Sprossen 3 aneinander gesperrt wird. Hierdurch wird die Montage der neuen Kabelpritsche 1 wesentlich vereinfacht, weil die Sprossen 3 vor dem Anbringen des jeweiligen Niets 24 nicht vorher in die Nut 4 eingefädelt werden müssen. Andererseits gestattet der Versatz der Löcher 26, 27 gegenüber der Längsachse 28 ein tiefes Einstecken der Sprossen 3 in die Nut 7, ohne daß bei ihrem Verschwenken eine ihrer Kanten mit dem Boden 12 kollidiert. Die Sprosse 3 kann somit möglichst tief bis in die Nut 7 hineinreichen und sie endet bei aufgerichteter Kabelpritsche 1 erst kurz vor den Biegeradien, an denen der Boden 12 in den leistenförmigen Abschnitt 9 bzw. den Flansch 14 übergeht.

Die Handhabung der neuen Kabelpritsche 1 geschieht in der Weise, daß die beiden Holme 2 an der Baustelle gegeneinander verschoben werden, wodurch die Sprossen 3 aus der spitzwinkligen Ausrichtung bezüglich der Holme 2 in eine rechtwinklige Lage gegenüber den Holmen 2 überführt werden. Hierdurch wird die Kabelpritsche 1 auf ihre Nutzbreite aufgespannt, während sie vorher,um die Platzbeanspruchung zu minimieren, zusammengefaltet war. Beim Aufrichten der Kabelpritsche 1 schwenken sämtliche Sprossen 3 um die zugehörige Niete 24 herum, wodurch ihr über den jeweiligen Niet 24 hinausstehendes Ende 29 in die Nut 7 eingeführt wird. Die nun aufgerichtete Kabelpritsche 1 wird auf die im Gebäude installierten Auflager aufgelegt und sie wird gegebenenfalls mit den Auflagern bzw. den an beiden Enden benachbarten Kabelpritschen 1 verschraubt. Es können sodann über den Sprossen 3 zwischen den beiden Holmen 2 die zu installierenden Kabel verlegt werden. Wenn infolge hoher Belastung der Kabelpritsche 1, die für Spannweiten zwischen 6 und 12 m vorgesehen ist, die Holme 2 sich wegen der auftretenden Spannungen beginnen zu verbiegen, schließt sich zunächst der Spalt zwischen der Oberseite der Flansche 22, 23 der Sprossen 3 und der Unterseite des leistenförmigen Abschnittes 9 infolge einer Verformung im Bereich des unteren Abschnittes der Holme 2. Der Steg 4 erhält somit eine zusätzliche unmittelbare Abstützung auf den Sprossen 3, wodurch es möglich ist, bei gleicher Materialstärke und Materialqualität höhere Lasten auf der Kabelpritsche 1 aufzubringen, verglichen mit Anordnungen, bei denen die Sprossen 3 nicht durch die von dem Steg 4 definierte Ebene hindurchführen. Gleichzeitig erzeugen die Sprossen 3, die sich zwischen dem Flansch 4 und dem leistenförmigen Abschnitt 9 bei Belastung der Kabelpritsche 1 einklemmen, ein Gegendrehmoment, das dem Verwinden der Stege 4 bei Belastung entgegenwirkt. Unter Belastung haben die Stege 4 die Tendenz, sich nach außen, d.h. voneinander weg umzubiegen, wenn die beiden Holme 2 im Bereich der Flansche 14 miteinander verbunden sind. Weil die Stege 4 an einer solchen Richtungsänderung von den in den Nuten 7 steckenden Sprossen 3 gehindert werden, bleiben die Stege 4 in der Senkrechten und die Holme 2 können entsprechend höher belastet werden.

## Patentansprüche

1. Kabelpritsche (1) mit zwei parallel im Abstand zueinander verlaufenden Holmen (2), von denen jeder einen auf die Länge durchlaufenden Steg (4) sowie einen oberen und einen unteren mit dem Steg (4) verbundenen und ebenfalls über die Länge durchlaufenden Flansch (5, 14) aufweist, und mit an dem unteren nach innen weisenden Flansch (14) angebrachten Sprossen (3), die die beiden Holme (2) miteinander verbinden und von denen jede an einer Stelle an dem zugehörigen Flansch (14) befestigt ist, die sich im Abstand von einer durch den Steg (4) definierten Ebene befindet,
**dadurch gekennzeichnet,** daß
oberhalb des unteren Flansches (14) der Steg (4) für jede Sprosse (3) einen Durchlaß aufweist, dessen Höhe gleich der Höhe der Sprosse (3) ist, und daß die Sprossen (3) die Ebene durchdringen.

2. Kabelpritsche nach Anspruch 1, dadurch gekennzeichnet, daß der obere und der untere Flansch (5, 14), bezogen auf den Steg (4) zu derselben Seite weisen.

3. Kabelpritsche nach Anspruch 1, dadurch gekennzeichnet, daß zwischen dem Steg (4) und dem unteren Flansch (14) für jede Sprosse (3) eine Öffnung vorgesehen ist, deren Höhe gleich der Höhe der Sprosse (3) ist.

4. Kabelpritsche nach Anspruch 3, dadurch gekennzeichnet, daß die Öffnung von einer durchgehenden Nut (7) gebildet ist, die zwischen dem Steg (4) und dem unteren Flansch (14) liegt.

5. Kabelpritsche nach Anspruch 4, dadurch gekennzeichnet, daß sich eine Seite des unteren Flansches (14) glatt in die Nut (7) fortsetzt.

6. Kabelpritsche nach Anspruch 4, dadurch gekennzeichnet, daß die Nut (7) eine lichte Weite, gemessen in Richtung des Abstandes zwischen dem oberen und dem unteren Flansch (5, 14) hat, die gleich der Höhe des in der Nut (7) sitzenden Endes (29) der zugehörigen Sprosse (3) ist.

7. Kabelpritsche nach Anspruch 4, dadurch gekennzeichnet, daß die Nut (7) parallele Flanken aufweist.

8. Kabelpritsche nach Anspruch 1, dadurch gekennzeichnet, daß der obere Flansch (5) an seinem von dem Steg (3) abliegenden Ende unter Ausbildung einer im wesentlichen in Richtung auf den unteren Flansch (14) weisenden Leiste (6) über seine gesamte Länge durchlaufend abgebogen ist.

9. Kabelpritsche nach Anspruch 1, dadurch gekennzeichnet, daß die Sprossen (3) über ihre gesamte Länge konstanten Querschnitt aufweisen.

10. Kabelpritsche nach Anspruch 9, dadurch gekennzeichnet, daß die Sprossen (3) einen C-förmigen Querschnitt aufweisen und mit ihrem im wesentlichen planen Boden (21) auf dem unteren Flansch (14) aufliegen.

11. Kabelpritsche nach Anspruch 1, dadurch gekennzeichnet, daß die Sprossen 3 mit den Holmen (2) schwenkbar miteinander verbunden sind, wobei die Schwenkachse senkrecht auf dem unteren Flansch (14) steht.

12. Kabelpritsche nach Anspruch 11, dadurch gekennzeichnet, daß zur schwenkbaren Verbindung zwischen den Holmen (2) und den Sprossen (3) jede Sprosse (3) an ihrem mit dem benachbarten Holm (2) zusammenwirkenden Ende ein Loch (26, 27) enthält, das mit einem Loch (25) in dem unteren Flansch (14) fluchtet, und daß in den miteinander fluchtenden Löchern (25, 26, 27) des unteren Flansches (14) sowie der Sprosse (3) ein Niet (24) sitzt.

13. Kabelpritsche nach Anspruch 12, dadurch gekennzeichnet, daß die Löcher (26, 27) in jeder Sprosse (3) zu beiden Seiten von deren Längsachse (28) liegen.

## Claims

1. Cable support (1) with two struts (2) running parallel and at a distance from one another, each of which has a web (4) extending continuously along the length and an upper and lower flange (5, 14) connected to the web (4) and also extending continuously along the length, and with staves (3), which are attached to the lower inwardly pointing flange (14) and connect the two struts (2) to one another, each of said staves (3) being fastened to one point on the corresponding flange (14) located at a distance from a plane defined by the web (4), characterised in that above the lower flange (14), the web (4) has a passage for each stave (3), the height of which is equal to the height of the stave (3); and that the staves (3) penetrate the plane.

2. Cable support according to Claim 1, characterised in that the upper and lower flanges (5, 14) point to the same side in relation to the web (4).

3. Cable support according to Claim 1, characterised in that an opening is provided for each stave (3) between the web (4) and the lower flange (14), the height of said opening being equal to the height of the stave (3).

4. Cable support according to Claim 3, characterised in that the opening is formed by a continuous groove (7), which lies between the web (4) and the lower flange (14).

5. Cable support according to Claim 4, characterised in that one side of the lower flange (14) merges smoothly into the groove (7).

6. Cable support according to Claim 4, characterised in that the clear width of the groove (7), measured in the direction of the distance between the upper and the lower flange (5, 14), is equal to the height of the end (29) of the corresponding stave (3) sitting in the groove (7).

7. Cable support according to Claim 4, characterised in that the groove (7) has parallel flanks.

8. Cable support according to claim 1, characterised in that the upper flange (5) is bent continuously over its entire length at its end remote from the web (3) to form ledge (6) pointing essentially in the direction of the lower flange (14).

9. Cable support according to Claim 1, characterised in that the cross-section of the staves (3) is constant over their entire length.

10. Cable support according to Claim 9, characterised in that the staves (3) have a C-shaped cross-section and lie on the lower flange (14) with their essentially plane base (21).

11. Cable support according to Claim 1, characterised in that the staves (3) with the struts (2) are pivoted to one another, the pivot axis being perpendicular to the lower flange (14).

12. Cable support according to Claim 11, characterised in that for the pivoting joint between the struts (2) and the staves (3), each stave (3) contains a hole (26, 27) at its end cooperating with the adjacent strut (2), said hole (26, 27) being flush to a hole (25) in the lower flange (14); and that a rivet (24) sits in the flush holes (25, 26, 27) in the lower flange (14) and the stave (3).

13. Cable support according to Claim 12, characterised in that the holes (26, 27) in each stave (3) are located on both sides of its longitudinal axis (28).

## Revendications

1. Chemin de câbles (1) comportant deux longerons (2) parallèles, mutuellement espacés, avec chacun une âme (4) qui s'étend de manière continue sur l'ensemble de la longueur et des ailes (5, 14) supérieure et inférieure qui sont liées à l'âme (4) et s'étendent également de manière continue sur l'ensemble de la longueur du longeron, ainsi que des traverses (3) qui sont appliquées sur l'aile (14) inférieure tournée vers l'intérieur, relient entre eux les deux longerons (2) et sont fixées chaque fois sur l'aile (14) concernée en un point situé à une distance déterminée par l'âme (4), caractérisé par le fait que l'âme (4) présente pour chaque traverse (3), au-dessus de l'aile (14) inférieure, un passage dont la hauteur est égale à la hauteur de la traverse (3) et par le fait que les traverses (3) pénètrent dans le plan.

2. Chemin de câbles selon la revendication 1, caractérisé par le fait que les ailes supérieure et inférieure (5, 14) sont orientées du même côté par rapport à l'âme (4)

3. Chemin de câbles selon la revendication 1, caractérisé par le fait qu'il est prévu pour chaque traverse (3), entre l'âme (4) et l'aile (14) inférieure, une ouverture dont la hauteur est égale à la hauteur de la traverse (3).

4. Chemin de câbles selon la revendication 3, caractérisé par le fait que l'ouverture est constituée par une rainure (7) continue qui est située entre l'âme (4) et l'aile (14) inférieure.

5. Chemin de câbles selon la revendication 4, caractérisé par le fait qu'une face de l'aile (14) inférieure se prolonge sans décroché dans la rainure (7).

6. Chemin de câbles selon la revendication 4, caractérisé par le fait que la rainure (7) présente, mesuré dans la direction de l'espace séparant les ailes (5, 14) supérieure et inférieure, une ouverture libre qui est égale à la hauteur de l'extrémité (29) placée dans ladite rainure (7) de la traverse (3) concernée.

7. Chemin de câbles selon la revendication 4, caractérisé par le fait que la rainure (7) comporte des flancs parallèles.

8. Chemin de câbles selon la revendication 1, caractérisé par le fait que l'aile (5) supérieure, à son extrémité éloignée de l'âme (4), est repliée de manière continue sur l'ensemble de la longueur et forme un bord (6) qui est orienté essentiellement en direction de l'aile (14) inférieure.

9. Chemin de câbles selon la revendication 1, caractérisé par le fait que les traverses (3) présentent une section transversale constante sur toute leur longueur.

10. Chemin de câbles selon la revendication 9, caractérisé par le fait que le traverses (3) ont une section transversale en C et reposent sur l'aile (14) inférieure par l'intermédiaire de leur fond (21) sensiblement plan.

11. Chemin de câbles selon la revendication 1, caractérisé par le fait que les traverses (3) sont liées aux longerons (2) avec possibilité de pivotement, l'axe de pivotement s'étendant perpendiculairement à l'aile (14) inférieure.

12. Chemin de câbles selon la revendication 11, caractérisé par le fait qu'aux fins de réaliser une liaison pivotante entre les longerons (2) et les traverses (3), chaque traverse (3) comporte à son extrémité qui coopère avec le longeron (2) voisin un trou (26, 27) qui est aligné avec un trou (25) dans l'aile (14) inférieure et par le fait qu'un rivet (24) est placé dans les trous (25, 26, 27) mutuellement alignés de l'aile (14) inférieure et de la traverse (3).

13. Chemin de câbles selon la revendication 12, caractérisé par le fait que les trous (26, 27) dans chaque traverse (3) sont disposés de part et d'autre de l'axe longitudinal (28) de celle-ci.
